# EUROPEAN PATENT APPLICATION

(11) **EP 1 728 804 A1**
(43) Date of publication of application: **06.12.2006**
(21) Application number: 05720211.1
(22) Date of filing: 08.03.2005
(51) Int. Cl.: C08F 220/10, C08L 33/04, C09D 4/00, C09D 133/04, C09D 163/00, G02B 1/10, G02B 5/23, G02C 7/10

(54) **CURABLE COMPOSITION AND OPTICAL MEMBER USING SAME**

(30) Priority: 22.03.2004 JP 2004082994
(71) Applicant: HOYA CORPORATION, 161-8525 Tokyo (JP)
(72) Inventor: OTA, Hiroshi, Hoya Corporation, Tokyo 1618525 (JP); SHINDE, Ken-ichi, Hoya Corporation, Tokyo 1618525 (JP)
(74) Representative: Albrecht, Thomas
(86) International application number: PCT/JP2005/003939
(87) International publication number: WO 2005/090421

(57) **Abstract**

The present invention provides a curable composition comprising (1) a radically polymerizable monomer, (2) an organosilicon compound containing an epoxy group bonded to one terminal end thereof, (3) an amine compound, (4) a photochromic compound and (5) a photopolymerization initiator, wherein the organosilicon compound (2) containing an epoxy group bonded to one terminal end thereof is a compound containing a silanol group or a compound containing a group capable of forming a silanol group by hydrolysis thereof; and an optical member comprising an optical substrate and a photochromic coating layer formed by applying the curable composition onto the optical substrate and curing the composition, as well as the curable composition used for producing the optical member.

## Description

### TECHNICAL FIELD

The present invention relates to curable compositions and optical members using the same, and more particularly to optical members having a photochromic coating layer exhibiting an excellent adhesion to an optical substrate, and curable compositions used for production thereof.

### BACKGROUND ART

The "photochromism" means such a reversible phenomenon that a certain kind of compound undergoes rapid color change in response to exposure to light containing an ultraviolet ray such as sunlight, and returned to its original color (colorless state) when shifted into the ultraviolet-free condition. This photochromism has been used in the application field of plastic spectacle lenses.
As the method for producing plastic spectacle lenses having such a photochromic property, there have been proposed a method of impregnating a photochromic compound into a surface of a lens having no photochromic property, a method of successively forming a primer layer having a photochromic property and a hard coat layer on a surface of a lens, or a method of directly producing a photochromic lens by dissolving a photochromic compound in a monomer and polymerizing the resultant solution. In particular, the coating method has been recently noticed because of its good applicability to various existing plastic lenses.
In PCT pamphlet WO 03/011967, there has been proposed the method in which a photochromic compound is dissolved in a radically polymerizable monomer, and the obtained solution is applied onto a surface of a lens and cured by irradiating an ultraviolet ray thereto. The radically polymerizable monomer used in this method contains a silanol group or a group capable of forming a silanol group by hydrolysis thereof in order to attain a good adhesion to a substrate. However, to achieve a sufficient adhesion force to the substrate, it is required to subject the plastic lens to complicated pretreatments before forming the photochromic coating layer thereon, and further it has been still difficult to attain a stable adhesion to the substrate even by the pretreatments.
Also, in order to ensure a good adhesion between the substrate and the photochromic coating layer, there has been proposed the method of treating the substrate with a primer. However, this method tends to require complicated steps as well as a prolonged film-forming time.

### DISCLOSURE OF THE INVENTION

### PROBLEM TO BE SOLVED BY THE INVENTION

The present invention has been made in view of the above problems. An object of the present invention is to provide an optical member having a photochromic coating layer exhibiting an excellent adhesion to an optical substrate, and a curable composition used for production of the optical member.

### MEANS FOR SOLVING PROBLEM

As a result of intensive and extensive researches, the inventors have found that the above object can be achieved by using the composition obtained by blending the below-mentioned components (1) to (5) with each other. The present invention has been accomplished on the basis of the finding.

Thus, the present invention provides:
A curable composition comprising:
   (1) a radically polymerizable monomer;
   (2) an organosilicon compound containing an epoxy group bonded to one terminal end thereof;
   (3) an amine compound;
   (4) a photochromic compound; and
   (5) a photopolymerization initiator,
      said organosilicon compound (2) containing an epoxy group bonded to one terminal end thereof being a compound containing a silanol group or a compound containing a group capable of forming a silanol group by hydrolysis thereof; and
      an optical member comprising an optical substrate and a photochromic coating layer formed by applying the above curable composition onto the optical substrate and curing the composition.

### EFFECT OF THE INVENTION

The optical member of the present invention includes a photochromic coating layer, and the coating layer can exhibit an excellent adhesion to an optical substrate. In addition, the curable composition of the present invention is suitably used as a raw material for production of such a photochromic coating layer having an excellent adhesion to various optical substrates.

### PREFERRED EMBODIMENTS FOR CARRYING OUT THE INVENTION

The present invention is described in detail below.
The curable composition of the present invention contains the following components (1) to (5):
(1) a radically polymerizable monomer;
(2) an organosilicon compound containing an epoxy group bonded to one terminal end thereof;
(3) an amine compound;
(4) a photochromic compound; and
(5) a photopolymerization initiator.

The respective components are explained below.
The radically polymerizable monomer used as the component (1) in the curable composition of the present invention is not particularly limited, and various known compounds containing a radically polymerizable group such as a (meth)acryloyl group, a (meth)acryloyloxy group, a vinyl group, an allyl group and a styryl group may be used as the component (1) without any particular limitations. Among these radically polymerizable monomers, in view of good availability and good curability, preferred are compounds containing a (meth)acryloyl group or a (meth)acryloyloxy group as a radically polymerizable group.
Meanwhile, the term "(meth)acryloyl" means acryloyl, methacryloyl or both thereof.
In order to achieve good properties required as a cured product such as solvent resistance, hardness and heat resistance, or attain good photochromic properties such as a high density of color developed and a high color fading rate, the radically polymerizable monomer is preferably in the form of a mixture of the monomer whose homopolymer has a L-scale Rockwell hardness of 60 or more (hereinafter occasionally referred to as a "high-hardness monomer") and the monomer whose homopolymer has a L-scale Rockwell hardness of 40 or less (hereinafter occasionally referred to as a "low-hardness monomer").
The L-scale Rockwell hardness means such a hardness measured according to JIS-B7726.
Thus, by measuring the hardness of homopolymers of the respective monomers, it can be readily determined whether or not the monomers can satisfy the requirements for hardness. More specifically, each monomer is polymerized to obtain a cured product having a thickness of 2 mm, and then allowed to stand at 25°C in a room for one day. Then, the L-scale Rockwell hardness of the thus obtained cured product is measured by a Rockwell hardness meter, whereby it can be readily confirmed whether the monomer satisfies any of the above hardness requirements.

The polymer to be subjected to the measurement of L-scale Rockwell hardness is obtained by cast-polymerizing the monomer under such a condition that 90% or more of polymerizable groups contained in the monomer charged are polymerized. The cured product obtained by polymerizing the monomer under the above condition can exhibit a substantially constant L-scale Rockwell hardness value when measured.
The above high-hardness monomer has an effect of increasing a solvent resistance, a hardness, a heat resistance or the like of the cured product. To attain the more remarkable effect, the radically polymerizable monomer whose homopolymer has a L-scale Rockwell hardness of 65 to 130 is preferably used as the high-hardness monomer.
Such a high-hardness monomer may be a compound containing usually 2 to 15 and preferably 2 to 6 radically polymerizable groups. Specific examples of the preferred high-hardness monomer include those compounds represented by the following general formulae (1) to (5):

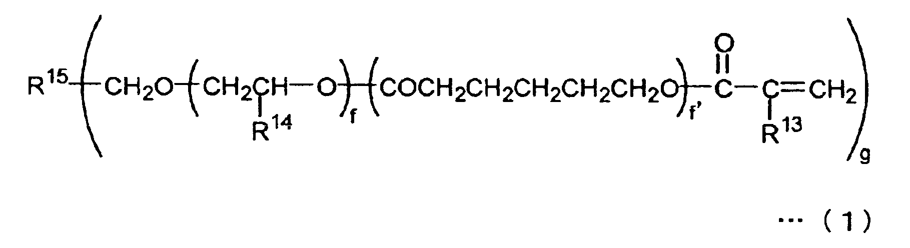

wherein R¹³ is a hydrogen atom or methyl; R¹⁴ is a hydrogen atom, methyl or ethyl; R¹⁵ is a trivalent to hexavalent organic group; f is an integer of 0 to 3; f' is an integer of 0 to 3; and g is an integer of 3 to 6.

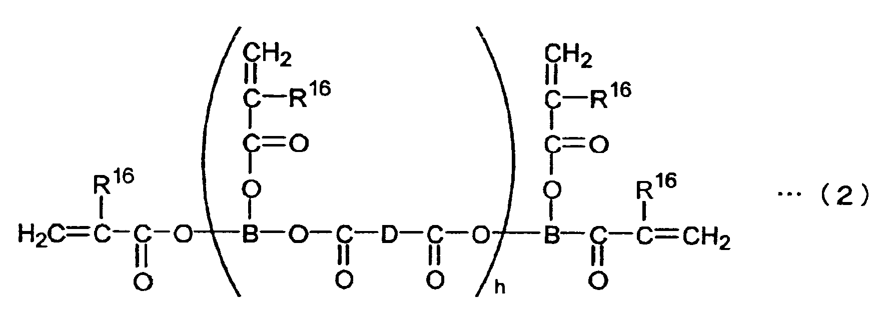

wherein R¹⁶ is a hydrogen atom or methyl; B is a trivalent organic group; D is a divalent organic group; and h is an integer of 1 to 10.

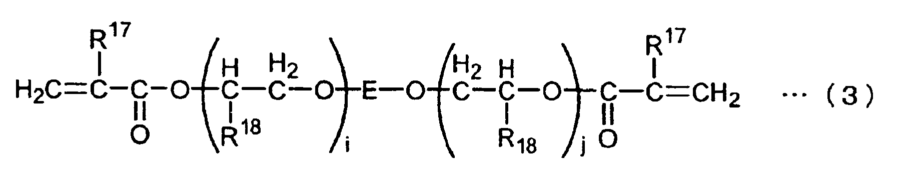

wherein R¹⁷ is a hydrogen atom or methyl; R¹⁸ is a hydrogen atom, methyl, ethyl or hydroxyl; E is a divalent organic group containing a cyclic group; i and j are positive integers with the proviso that an average value of (i + j) is from 0 to 6.

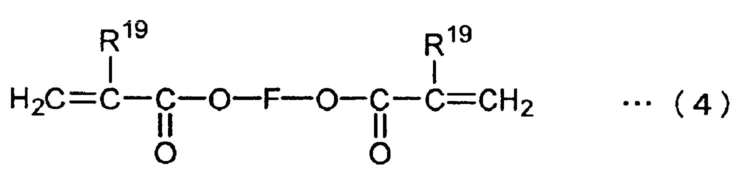

wherein R¹⁹ is a hydrogen atom or methyl; and F is an alkylene group containing a main chain having 2 to 9 carbon atoms which may have a side chain.

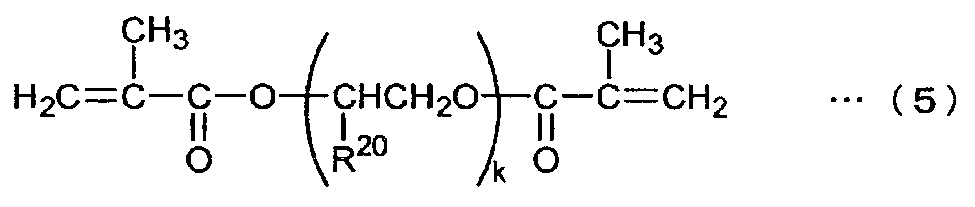

wherein R²⁰ is a hydrogen atom, methyl or ethyl; and k is an integer of 1 to 6.

Since R¹³ to R¹⁹ in the above general formulae (1) to (4) all are respectively a hydrogen atom or methyl, the compounds represented by the general formulae (1) to (4) are compounds containing 2 to 6 (meth)acryloyloxy groups.
In the above general formula (1), R¹⁴ is a hydrogen atom, methyl or ethyl.
In the above general formula (1), R¹⁵ is a trivalent to hexavalent organic group. Such a trivalent to hexavalent organic group is not particularly limited, and may contain a bond other than a carbon-to-carbon bond such as an ester bond, an ether bond, an amide bond, a thioether bond, a sulfonyl bond and an urethane bond in a main chain thereof. To allow a homopolymer of the monomer to exhibit a L-scale Rockwell hardness of 60 or more, R¹⁵ is preferably an organic group having 1 to 30 carbon atoms and more preferably an organic group having 1 to 15 carbon atoms which may contain an ether bond and/or an urethane bond.
Also, f and f are each independently an integer of 0 to 3. Further, to allow a homopolymer of the monomer to exhibit a L-scale Rockwell hardness of 60 or more, a sum of f and f' is preferably from 0 to 3.

Specific examples of the high-hardness monomer represented by the above general formula (1) include trimethylolpropane trimethacrylate, trimethylolpropane triacrylate, tetramethylolmethane trimethacrylate, tetramethylolmethane triacrylate, tetramethylolmethane tetramethacrylate, tetramethylolmethane tetraacrylate, trimethylolpropane triethylene glycol trimethacrylate, trimethylolpropane triethylene glycol triacrylate, ethoxylated pentaerythritol tetraacrylate, ethoxylated pentaerythritol tetramethacrylate, pentaerythritol trimethacrylate, pentaerythritol tetramethacrylate, dipentaerythritol hexaacrylate, urethane oligomer tetraacrylate, urethane oligomer hexamethacrylate, urethane oligomer hexaacrylate, polyester oligomer hexaacrylate, caprolactone-modified dipentaerythritol hexaacrylate and ditrimethylolpropane tetraacrylate.

In the above general formula (2), B is a trivalent organic group, and D is a divalent organic group. The B and D groups are not particularly limited, and may contain a bond other than a carbon-to-carbon bond such as an ester bond, an ether bond, an amide bond, a thioether bond, a sulfonyl bond and an urethane bond in a main chain thereof. To allow a homopolymer of the monomer to exhibit a L-scale Rockwell hardness of 60 or more, B is preferably an organic group derived from linear or branched hydrocarbons having 3 to 10 carbon atoms, and D is preferably an organic group derived from linear or branched aliphatic hydrocarbons having 1 to 10 carbon atoms or aromatic hydrocarbons having 6 to 10 carbon atoms.
In addition, to allow a homopolymer of the monomer to exhibit a L-scale Rockwell hardness of 60 or more, h is an integer of 1 to 10 and preferably 1 to 6.
Specific examples of the high-hardness monomer represented by the above general formula (2) include tetrafunctional polyester oligomers having a molecular weight of 2,500 to 3,500 (such as "EB80" available from DAICEL-CYTEC Company, Ltd.), tetrafunctional polyester oligomers having a molecular weight of 6,000 to 8,000 (such as "EB450" available from DAICEL-CYTEC Company, Ltd.), hexafunctional polyester oligomers having a molecular weight of 45,000 to 55,000 (such as "EB1830" available from DAICEL-CYTEC Company, Ltd.) and tetrafunctional polyester oligomers having a molecular weight of 10,000 (such as "GX8488B" available from Dai-ichi Kogyo Seiyaku Co., Ltd.).

In the above general formula (3), R¹⁸ is a hydrogen atom, methyl, ethyl or hydroxyl. In the general formula (3), E is a divalent organic group containing a cyclic group. The organic group as E is not particularly limited as long as it contains a cyclic group, and may contain a bond other than a carbon-to-carbon bond such as an ester bond, an ether bond, an amide bond, a thioether bond, a sulfonyl bond and an urethane bond in a main chain thereof. Examples of the cyclic group contained in E include a benzene ring, a cyclohexane ring, an adamantane ring or cyclic groups represented by the following formulae: 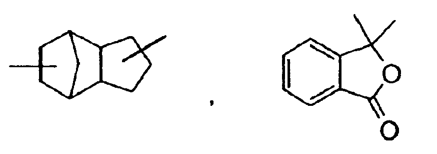 The cyclic group contained in E is preferably a benzene ring. Further, E is more preferably a group represented by the general formula:

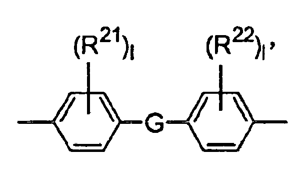

wherein G is any group selected from the group consisting of an oxygen atom, a sulfur atom, -S(O₂)-, -C(O)-, -CH₂-, -CH=CH-, -C(CH₃)₂- and -C(CH₃)(C₆H₅)-; R²¹ and R²² are each independently an alkyl group having 1 to 4 carbon atoms or a halogen atom; and 1 and 1' are each independently an integer of 0 to 4.
E is most preferably a group represented by the following formula:

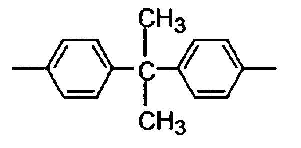

In the above general formula (3), i and j are positive integers with the proviso that an average value of (i + j) is from 0 to 6. Meanwhile, the compound represented by the above general formula (3) is usually obtained in the form of a mixture of a plurality of compounds which are different in the integers i and j from each other. However, since it is difficult to isolate these compounds from each other, the integers i and j are defined by an average value of a sum (i + j) thereof. The average value of (i + j) is more preferably from 2 to 6.
Specific examples of the high-hardness monomer represented by the general formula (3) include bisphenol A dimethacrylate, 2,2-bis(4-methacryloyloxyethoxyphenyl)propane and 2,2-bis(3,5-dibromo-4-methacryloyloxyethoxyphenyl)propane.

In the above general formula (4), R¹⁹ is a hydrogen atom or methyl, and F is an alkylene group containing a main chain having 2 to 9 carbon atoms which may contain a side chain. Examples of the alkylene group containing a main chain having 2 to 9 carbon atoms include ethylene, propylene, trimethylene, butylene, neopentylene, hexylene and nonylene.
Specific examples of the high-hardness monomer represented by the general formula (4) include ethylene glycol diacrylate, ethylene glycol dimethacrylate, 1,4-butylene glycol dimethacrylate, 1,9-nonylene glycol dimethacrylate, neopentylene glycol dimethacrylate and neopentylene glycol diacrylate.

In the above general formula (5), R²⁰ is a hydrogen atom, methyl or ethyl, and k is an integer of 2 to 6 and preferably 3 or 4.
Specific examples of the high-hardness monomer represented by the general formula (5) include diethylene glycol dimethacrylate, triethylene glycol dimethacrylate, tetraethylene glycol dimethacrylate, tripropylene glycol dimethacrylate and tetrapropylene glycol dimethacrylate.
Meanwhile, homopolymers of the compounds represented by the above general formulae (1) to (5) might have a L-scale Rockwell hardness of less than 60 depending upon combination of substituent groups thereof. In this case, these compounds are classified into the below-mentioned low-hardness monomer or medium-hardness monomer.
Also, there are present high-hardness monomers which are not represented by the above general formulae (1) to (5). Typical examples of such high-hardness monomers include bisphenol A diglycidyl methacrylate, ethylene glycol bisglycidyl methacrylate and glycidyl methacrylate.

On the other hand, the low-hardness monomer has an effect of enhancing a toughness of the obtained cured product as well as improving a color fading rate of the photochromic compound.
Examples of the low-hardness monomer include difunctional monomers represented by the general formula (6): 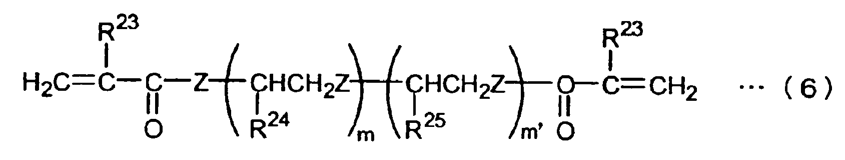 wherein R²³ is a hydrogen atom or methyl; R²⁴ and R²⁵ are each independently a hydrogen atom, methyl or ethyl; Z is an oxygen atom or a sulfur atom; m is an integer of 1 to 70 when R²³ is a hydrogen atom, or m is an integer of 7 to 70 when R²³ is methyl, and m' is an integer of 0 to 70,

or difunctional monomers represented by the general formula (7): 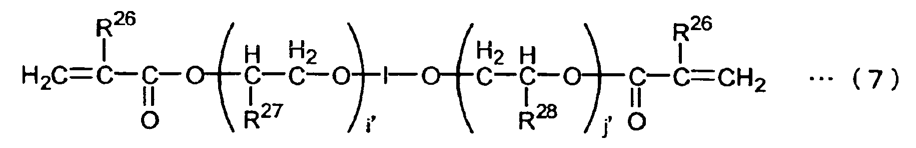 wherein R²⁶ is a hydrogen atom or methyl; R²⁷ and R²⁸ are each independently a hydrogen atom, methyl, ethyl or hydroxyl; I is a divalent organic group containing a cyclic group; and i' and j' are integers with the proviso that an average value of (i' + j') is from 8 to 40, monofunctional monomers represented by the general formula (8):

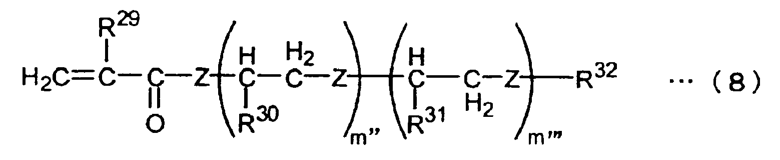

wherein R²⁹ is a hydrogen atom or methyl; R³⁰ and R³¹ are each independently a hydrogen atom, methyl or ethyl; R³² is a hydrogen atom, an alkyl group having 1 to 25 carbon atoms, an alkenyl group having 1 to 25 carbon atoms, an alkoxyalkyl group having 1 to 25 carbon atoms, a haloalkyl group having 1 to 25 carbon atoms, an aryl group having 6 to 25 carbon atoms or an acyl group having 2 to 25 carbon atoms other than a (meth)acryloyl group; Z is an oxygen atom or a sulfur atom; m" is an integer of 1 to 70 when R²⁹ is a hydrogen atom, and an integer of 4 to 70 when R²⁹ is methyl; and m"' is an integer of 0 to 70, and

or monofunctional monomers represented by the general formula (9): 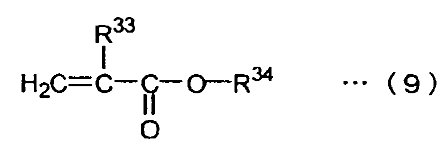 wherein R³³ is a hydrogen atom or methyl; and R³⁴ is an alkyl group having 1 to 20 carbon atoms when R³³ is a hydrogen atom, or an alkyl group having 8 to 40 carbon atoms when R³³ is methyl.

In the above general formulae (6) to (9), R²³, R²⁶, R²⁹ and R³³ are respectively a hydrogen atom or methyl. Namely, the low-hardness monomer usually contains, as a polymerizable group, two or less (meth)acryloyloxy groups or (meth)acryloylthio groups.
In the general formula (6), R²⁴ and R²⁵ are each independently a hydrogen atom, methyl or ethyl; and Z is an oxygen atom or a sulfur atom.
In the above general formulae (6), when R²³ is a hydrogen atom, namely when the compound represented by the general formula (6) contains an acryloyloxy group or an acryloylthio group as the polymerizable group, m is an integer of 1 to 70, whereas when R²³ is methyl, namely when the compound represented by the general formula (6) contains a methacryloyloxy group or a methacryloylthio group as the polymerizable group, m is an integer of 7 to 70; and m' is an integer of 0 to 70.
Specific examples of the low-hardness monomer represented by the general formula (6) include alkylene glycol di(meth)acrylates such as trialkylene glycol diacrylate, tetraalkylene glycol diacrylate, nonylalkylene glycol diacrylate and nonylalkylene glycol dimethacrylate.

R²⁶ in the general formula (7) is a hydrogen atom, methyl or ethyl.
Also, in the general formula (7), I is a divalent organic group containing a cyclic group. Examples of I are the same groups as exemplified as E which is the cyclic group contained in the general formula (3). In the general formula (7), i' and j' are integers with the proviso that an average value of (i' + j') is from 8 to 40 and preferably from 9 to 30. The i' and j' are also expressed by an average value of a sum thereof for the same reason as described with respect to the integers i and j in the general formula (3).
Specific examples of the low-hardness monomer represented by the general formula (7) include 2,2-bis(4-acryloyloxypolyethyleneglycol phenyl)propane having an average molecular weight of 776, etc.

In the above general formulae (8), R²⁹ is a hydrogen atom or methyl; R³⁰ and R³¹ are each independently a hydrogen atom, methyl or ethyl; R³² is a hydrogen atom, an alkyl group having 1 to 25 carbon atoms, an alkenyl group having 1 to 25 carbon atoms, an alkoxyalkyl group having 1 to 25 carbon atoms, a haloalkyl group having 1 to 25 carbon atoms, an aryl group having 6 to 25 carbon atoms or an acyl group having 2 to 25 carbon atoms other than an acryloyl group.
Examples of the alkyl or alkenyl group having 1 to 25 carbon atoms include methyl, ethyl, propyl and nonyl. These alkyl or alkenyl groups may be either linear or branched, and may be substituted with a halogen atom, a hydroxyl group, an aryl group, an epoxy group, etc.
Examples of the alkoxyalkyl group having 1 to 25 carbon atoms include methoxybutyl, ethoxybutyl, butoxybutyl and methoxynonyl.
Examples of the aryl group having 6 to 25 carbon atoms include phenyl, toluyl, anthranyl and octylphenyl. Examples of the acyl group other than a (meth) acryloyl group include acetyl, propionyl, butyryl, valeryl and oleyl.
In the above general formulae (8), when R²⁹ is a hydrogen atom, namely when the compound represented by the general formula (8) contains an acryloyloxy group or an acryloylthio group as the polymerizable group, m" is an integer of 1 to 70, whereas when R²⁹ is methyl, namely when the compound represented by the general formula (8) contains a methacryloyloxy group or a methacryloylthio group as the polymerizable group, m" is an integer of 4 to 70; and m"' is an integer of 0 to 70.

Specific examples of the low-hardness monomer represented by the general formula (8) include polyalkylene glycol (meth)acrylates such as polyethylene glycol methacrylate having an average molecular weight of 526, polyethylene glycol methacrylate having an average molecular weight of 360, methyl ether polyethylene glycol methacrylate having an average molecular weight of 475, methyl ether polyethylene glycol methacrylate having an average molecular weight of 1,000, polypropylene glycol methacrylate having an average molecular weight of 375, polypropylene methacrylate having an average molecular weight of 430, polypropylene methacrylate having an average molecular weight of 622, methyl ether polypropylene glycol methacrylate having an average molecular weight of 620, polytetramethylene glycol methacrylate having an average molecular weight of 566, octylphenyl ether polyethylene glycol methacrylate having an average molecular weight of 2,034, nonyl ether polyethylene glycol methacrylate having an average molecular weight of 610, methyl ether polyethylene thioglycol methacrylate having an average molecular weight of 640 and perfluorobutyl ethylene glycol methacrylate having an average molecular weight of 498.

In the above general formulae (9), R³³ is a hydrogen atom or methyl. When R³³ is a hydrogen atom, R³⁴ is an alkyl group having 1 to 20 carbon atoms, whereas when R³³ is methyl, R³⁴ is an alkyl group having 8 to 40 carbon atoms. These alkyl groups may be either linear or branched, and may be substituted with a halogen atom, a hydroxyl group, an alkoxyl group, an acyl group, an epoxy group, etc.
Specific examples of the low-hardness monomer represented by the general formula (9) include stearyl methacrylate, lauryl methacrylate, ethylhexyl methacrylate, methyl acrylate, ethyl acrylate, butyl acrylate and lauryl acrylate.
Among these low-hardness monomers represented by the general formulae (6) to (9), especially preferred are methyl ether polyethylene glycol methacrylate having an average molecular weight of 475, methyl ether polyethylene glycol methacrylate having an average molecular weight of 1,000, trialkylene glycol diacrylate, tetraalkylene glycol diacrylate, nonylalkylene glycol diacrylate, methyl acrylate, ethyl acrylate, butyl acrylate and lauryl acrylate.
Among the compounds represented by the above general formulae (6) to (9), homopolymers thereof might have a L-scale Rockwell hardness of 40 or more depending upon combination of substituent groups thereof. In this case, these compounds are classified into the above-mentioned high-hardness monomer or the below-mentioned medium-hardness monomer.

Examples of monomers belonging to neither the above high-hardness monomer nor the above low-hardness monomer, i.e., such monomers which provides a singly cured product (homopolymer) having a L-scale Rockwell hardness of more than 40 but less than 60 (hereinafter occasionally referred to a "medium-hardness monomer") include difunctional (meth)acrylates such as polytetramethylene glycol dimethacrylate having an average molecular weight of 650, polytetramethylene glycol dimethacrylate having an average molecular weight of 1,400 and bis(2-methacryloyoxyethylthioethyl)sulfide; polyvalent allyl compounds such as diallyl phthalate, diallyl isophthalate, diallyl tartrate, diallyl epoxy succinate, diallyl fumarate, diallyl chlorendate, diallyl hexaphthalate and allyl diglycol carbonate; polyvalent thioacrylic ester or polyvalent thiomethacrylic ester compounds such as 1,2-bis(methacryloylthio)ethane, bis(2-acryloylthioethyl)ether and 1,4-bis(methacryloylthlomethyl)benzene; unsaturated carboxylic acids such as acrylic acid, methacrylic acid and maleic anhydride; acrylic ester or methacrylic ester compounds such as methyl methacrylate, butyl methacrylate, benzyl methacrylate, phenyl methacrylate, 2-hydroxyethyl methacrylate and biphenyl methacrylate; fumaric ester compounds such as diethyl fumarate and diphenyl fumarate; thioacrylic ester or thiomethacrylic ester compounds such as methyl thioacrylate, benzyl thioacrylate and benzyl thiomethacrylate; vinyl compounds such as styrene, chlorostyrene, methyl styrene, vinyl naphthalene, α-methyl styrene dimer, bromostyrene, divinyl benzene and vinyl pyrrolidone; and radically polymerizable monofunctional monomers, e.g., (meth)acrylates having 6 to 25 carbon atoms which contains a hydrocarbon chain having an unsaturated bond in a molecule thereof, such as oleyl methacrylate, nerol methacrylate, geraniol methacrylate, linalool methacrylate and farnesol methacrylate.

These medium-hardness monomers may also used in the present invention. In this case, the high-hardness monomer, the low-hardness monomer and the medium-hardness monomer can be appropriately mixed with each other. In order to attain a well-balanced condition between properties of the cured product obtained from the curable composition such as solvent resistance, hardness and heat resistance, and photochromic properties such as a density of color developed and a color fading rate, the content of the low-hardness monomer in the above radically polymerizable monomer is preferably 5 to 70% by weight, and the content of the high-hardness monomer in the above radically polymerizable monomer is preferably 5 to 95% by weight. Further, the high-hardness monomer blended preferably contains the monomer having three or more radically polymerizable groups in an amount of 5% by weight or more in the other radically polymerizable monomers.

The radically polymerizable monomer used in the present invention preferably further contains, in addition to the monomers classified above according to the hardness thereof, a radically polymerizable monomer containing at least one epoxy group and at least one radically polymerizable group in a molecule thereof (hereinafter referred to merely as an "epoxy-based monomer"). The epoxy-based monomer may provide either a singly cured product (homopolymer) having a L-scale Rockwell hardness of 60 or more, or a singly cured product having a L-scale Rockwell hardness of 40 or less, depending upon a structure thereof. The epoxy-based monomers are classified into any of the high-hardness monomer, the low-hardness monomer and the medium-hardness monomer according to the hardness of the homopolymer thereof.
When the epoxy-based monomer is used as a component of the radically polymerizable monomer in the present invention, the photochromic compound can be further improved in durability, and besides the resultant photochromic coating layer can be enhanced in adhesion to the substrate.
The epoxy-based monomers may be known compounds, and are preferably compounds containing a (meth)acryloyloxy group as a radically polymerizable group.
The epoxy-based monomers are usually represented by the following general formula (10):

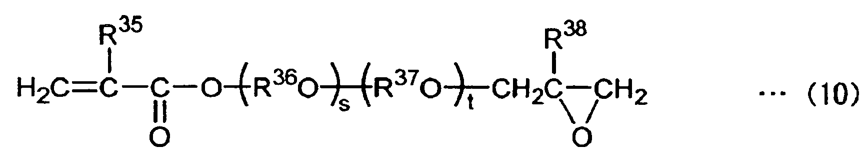

wherein R³⁵ and R³⁸ are each independently a hydrogen atom or methyl; R³⁶ and R³⁷ are each independently an alkylene group having 1 to 4 carbon atoms or a group represented by the following general formula: 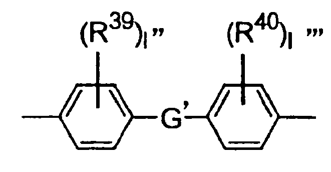 wherein G' is a group selected from the group consisting of an oxygen atom, a sulfur atom, -S(O₂)-, -C(O)-, -CH₂-, -CH=CH-, -C(CH₃)₂- and -C(CH₃)(C₆H₅)-; R³⁹ and R⁴⁰ are each independently an alkyl group having 1 to 4 carbon atoms or a halogen atom; and 1" and 1"' are each independently an integer of 0 to 4.

Examples of the alkylene group having 1 to 4 carbon atoms as R³⁶ and R³⁷ include methylene, ethylene, propylene, trimethylene and butylene. These alkylene groups may be substituted with a hydroxyl group, a halogen atom, etc.
When R³⁶ and/or R³⁷ are groups represented by the following formula: 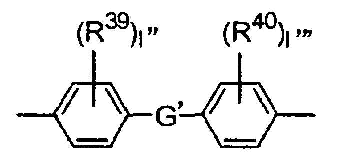 G' is a group selected from the group consisting of an oxygen atom, a sulfur atom, -S(O₂)-, -C(O)-, -CH₂-, -CH=CH-, -C(CH₃)₂- and -C(CH₃)(C₆H₅)-; R³⁹ and R⁴⁰ are each independently an alkyl group having 1 to 4 carbon atoms such as methyl, ethyl, propyl and butyl, or a halogen atom such as chlorine and bromine; and 1" and 1"' are each independently an integer of 0 to 4. The group represented by the above formula is most preferably a group represented by the following formula:

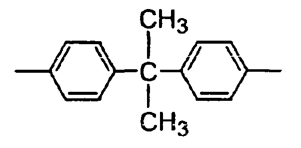

Specific examples of the epoxy-based monomer represented by the general formula (10) include glycidyl acrylate, glycidyl methacrylate, β-methylglycidyl methacrylate, bisphenol A-monoglycidyl ether-methacrylate, 4-glycidyloxymethacrylate, 3-(glycidyl-2-oxyethoxy)-2-hydroxypropyl methacrylate, 3-(glycidyloxy-1-isopropyloxy)-2-hydroxypropyl acrylate, 3-(glycidyloxy-2-hydroxypropyloxy)-2-hydroxypropyl acrylate and glycidyloxypolyethylene glycol methacrylate having an average molecular weight of 540. Among these epoxy-based monomers, especially preferred are glycidyl acrylate, glycidyl methacrylate and glycidyloxypolyethylene glycol methacrylate having an average molecular weight of 540.
The content of the epoxy-based monomer in the radically polymerizable monomer is usually 0.01 to 30% by weight and preferably 0.1 to 20% by weight on the basis of the weight of the radically polymerizable monomer.

When the organosilicon compound containing an epoxy group bonded to one terminal end thereof as the component (2) is blended in the curable composition of the present invention, the photochromic coating layer obtained by applying the composition on the substrate and curing the composition can exhibit a stable adhesion to the substrate.
The organosilicon compound as the component (2) is a compound containing a silanol group or a compound containing a group capable of forming a silanol group by hydrolysis thereof. Examples of the organosilicon compound include organosilicon compounds represented by the following general formula (I):

(R⁸¹)ₐ(R⁸³)_{b}Si(OR⁸²)_{4-(a+b)} (I)

wherein R⁸¹ is an organic group containing an epoxy group; R⁸² is an alkyl group having 1 to 4 carbon atoms, an acyl group having 1 to 4 carbon atoms or an aryl group having 6 to 10 carbon atoms; R⁸³ is an alkyl group having 1 to 6 carbon atoms or an aryl group having 6 to 10 carbon atoms; a is an integer of 1; and b is an integer of 0 or 1, and hydrolyzed products thereof.

Examples of the organic group containing an epoxy group as R⁸¹ include an epoxy group, glycidoxy groups such as α-glycidoxy, β-glycidoxy, γ-glycidoxy and δ-glycidoxy, and a 3,4-epoxycyclohexyl group.
Examples of the alkyl group having 1 to 4 carbon atoms as R⁸² include methyl, ethyl, propyl and butyl. These alkyl groups may be either linear or branched.
Examples of the acyl group having 1 to 4 carbon atoms as R⁸² include acetyl, propionyl, oleyl and benzoyl.
Examples of the aryl group having 6 to 10 carbon atoms as R⁸² include phenyl, xylyl and tolyl.
Examples of the alkyl group having 1 to 6 carbon atoms as R⁸³ include methyl, ethyl, propyl, butyl, pentyl and hexyl. These alkyl groups may be either linear or branched.
Examples of the aryl group having 6 to 10 carbon atoms as R⁸³ include phenyl, xylyl and tolyl.

Specific examples of the compound represented by the above general formula (I) include glycidoxymethyl triethoxysilane, α-glycidoxyethyl triethoxysilane, β-glycidoxyethyl trimethoxysilane, β-glycidoxyethyl triethoxysilane, α-glycidoxypropyl trimethoxysilane, α-glycidoxypropyl triethoxysilane, β-glycidoxypropyl trimethoxysilane, β-glycidoxypropyl triethoxysilane, γ-glycidoxypropyl trimethoxysilane, γ-glycidoxypropyl triethoxysilane, γ-glycidoxypropyl tripropoxysilane, γ-glycidoxypropyl tributoxysilane, γ-glycidoxypropyl triphenoxysilane, α-glycidoxybutyl trimethoxysilane, α-glycidoxybutyl triethoxysilane, β-glycidoxybutyl trimethoxysilane, β-glycidoxybutyl triethoxysilane, γ-glycidoxybutyl trimethoxysilane, γ-glycidoxybutyl triethoxysilane, δ-glycidoxybutyl trimethoxysilane, δ-glycidoxybutyl triethoxysilane, (3,4-epoxycyclohexyl)methyl trimethoxysilane, (3,4-epoxycyclohexyl)methyl triethoxysilane, β-(3,4-epoxycyclohexyl)ethyl trimethoxysilane, β-(3,4-epoxycyclohexyl)ethyl triethoxysilane, β-(3,4-epoxycyclohexyl)ethyl tripropoxysilane, β-(3,4-epoxycyclohexyl)ethyl tributoxysilane, β-(3,4-epoxycyclohexyl)ethyl triphenoxysilane, γ-(3,4-epoxycyclohexyl)propyl trimethoxysilane, γ-(3,4-epoxycyclohexyl)propyl triethoxysilane, δ-(3,4-epoxycyclohexyl)butyl trimethoxysilane, δ-(3,4-epoxycyclohexyl)butyl triethoxysilane, glycidoxymethylmethyl dimethoxysilane, glycidoxymethylmethyl diethoxysilane, α-glycidoxyethylmethyl dimethoxysilane, α-glycidoxyethylmethyl diethoxysilane, β-glycidoxyethylmethyl dimethoxysilane, β-glycidoxyethylmethyl diethoxysilane, α-glycidoxypropylmethyl dimethoxysilane, α-glycidoxypropylmethyl diethoxysilane, β-glycidoxypropylmethyl dimethoxysilane, β-glycidoxypropylmethyl diethoxysilane, γ-glycidoxypropylmethyl dimethoxysilane, γ-glycidoxypropylmethyl diethoxysilane, γ-glycidoxypropylmethyl dipropoxysilane, γ-glycidoxypropylmethyl dibutoxysilane, γ-glycidoxypropylmethyl diphenoxysilane, γ-glycidoxypropylethyl dimethoxysilane, γ-glycidoxypropylethyl diethoxysilane, γ-glycidoxypropylvinyl dimethoxysilane, γ-glycidoxypropylvinyl diethoxysilane, γ-glycidoxypropylphenyl dimethoxysilane and γ-glycidoxypropylphenyl diethoxysilane. Among these compounds, preferred are γ-glycidoxypropyl trimethoxysilane, γ-glycidoxypropyl triethoxysilane, γ-glycidoxypropyl tripropoxysilane, γ-glycidoxypropyl tributoxysilane, γ-glycidoxypropylmethyl diethoxysilane, γ-glycidoxypropylethyl dimethoxysilane and γ-glycidoxypropylethyl diethoxysilane.
The amount of the organosilicon compound as the component (2) blended in the curable composition is usually 1.0 to 15 parts by weight and preferably 3.0 to 10 parts by weight on the basis of 100 parts by weight of the radically polymerizable monomer.

The curable composition of the present invention contains the amine compound as the component (3). When the curable composition of the present invention which contains the amine compound is used as a coating material, the photochromic coating layer formed from a cured product of the curable composition can be considerably enhanced in adhesion to the optical substrate.
The amine compound used as the component (3) in the present invention may be selected from known amine compounds without any particular limitations as long as it is a basic compound capable of acting as a condensation catalyst or an addition catalyst for the radically polymerizable monomer.

The amine compounds having no functions required for the amine compound used as the component (3) in the present invention, i.e., those amine compounds excluded from the amine compound as the component (3), include, for example, hindered amine compounds containing only an amino group represented by the following formula: 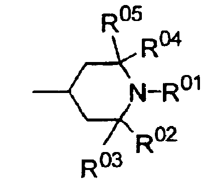 wherein R⁰¹ is a hydrogen atom or an alkyl group; R⁰², R⁰³, R⁰⁴ and R⁰⁵ are respectively an alkyl group, and may be the same or different from each other.

Specific examples of the amine compound usable in the present invention include non-polymerizable low-molecular amine compounds such as triethanolamine, N-methyldiethanolamine, triisopropnolamine, 4,4-dimethylaminobenzophenone and diazabicyclooctane; amine compounds containing a polymerizable group such as N,N-dimethylaminoethyl methacrylate and N,N-diethylaminoethyl methacrylate; and amine compounds containing a silyl group such as n-(hydroxyethyl)-N-methylaminopropyl trimethoxysilane, dimethoxyphenyl-2-piperidinoethoxysilane, N,N-diethylaminomethyl trimethylsilane and (N,N-diethyl-3-aminopropyl)trimethoxysilane.
Among these amine compounds, in view of improving adhesion of the photochromic coating layer to the substrate, preferred are those amine compounds containing a hydroxyl group, a (meth)acryloyloxy group as the radically polymerizable group, or a group capable of forming a silanol group by hydrolysis thereof.

Examples of the more preferred amine compounds exhibiting a strong basicity and a high adhesion improving effect include those amine compounds represented by the following general formula (11): 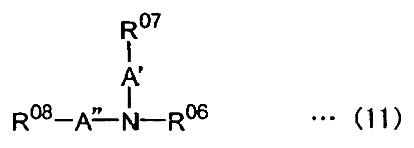 wherein R⁰⁶ is a hydrogen atom or a linear alkyl group having 1 to 4 carbon atoms; R⁰⁷ is a hydroxyl group, a (meth)acryloyloxy group or a group capable of forming a silanol group by hydrolysis thereof; R⁰⁸ is a hydrogen atom, an alkyl group having 1 to 6 carbon atoms, a hydroxyl group, a (meth)acryloyloxy group or a group capable of forming a silanol group by hydrolysis thereof; A' is an alkylene group having 2 to 6 carbon atoms; and A" is an alkylene group having 1 to 6 carbon atoms when R⁰⁸ is a hydrogen atom or an alkyl group, and an alkylene group having 2 to 6 carbon atoms when R⁰⁸ is a hydroxyl group, a (meth)acryloyloxy group or a group capable of forming a silanol group by hydrolysis thereof.

The group capable of forming a silanol group by hydrolysis thereof as R⁰⁷ and R⁰⁸ in the general formula (11) has the same meaning as explained in the above organosilicon compound.
These amine compounds may be used alone or in the form of a mixture of several kinds thereof. The amount of the amine compound as the component (3) blended is 0.01 to 20 parts by weight and preferably 0.1 to 10 parts by weight on the basis of 100 parts by weight of the radically polymerizable monomer.

The photochromic compound used as the component (4) in the curable composition of the present invention may be selected from known compounds. Examples of the photochromic compound include fulgimide compounds, spiro-oxazine compounds and chromene compounds. In the present invention, these photochromic compounds may be used without any particular limitations.
Examples of the above fulgimide compounds, spiro-oxazine compounds and chromene compounds suitably used in the present invention include those compounds described in Japanese Patent Application Laid-open Nos. 28154/1990 and 288830/1987, PCT Pamphlet Nos. WO94/22850 and WO96/14596, etc.
In addition, there may also be suitably used photochromic compounds having excellent photochromic properties described, for example, in Japanese Patent Application Laid-open Nos. 114775/2001, 031670/2001, 011067/2001, 011066/2001, 347346/2000, 344762/2000, 344761/2000, 327676/2000, 327675/2000, 256347/2000, 229976/2000, 229975/2000, 229974/2000, 229973/2000, 229972/2000, 219687/2000, 219686/2000, 219685/2000, 322739/1999, 286484/1999, 279171/1999, 298176/1998, 218301/1997, 124645/1997, 295690/1996, 176139/1996 and 157467/1996, etc.

Among these photochromic compounds, the chromene-based photochromic compounds are more preferably used since they can exhibit a higher durability of photochromic properties thereof as well as a higher effect of improving photochromic properties such as density of color developed and color fading rate as compared the other photochromic compounds. Further, among these chromene-based photochromic compounds, those having a molecular weight of 540 or more can be more suitably used because these compounds can exhibit a still higher effect of improving photochromic properties such as density of color developed and color fading rate as compared the other chromene-based photochromic compounds.

Furthermore, examples of the especially suitable chromene compounds which can exhibit various excellent photochromic properties such as density of color developed, color fading rate and durability, include those compounds represented by the following general formula (12): 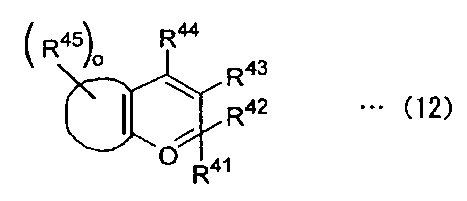 wherein the group represented by the general formula (13):

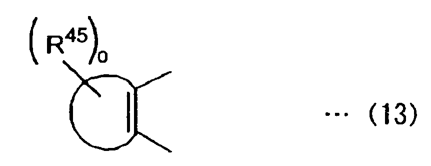

is a substituted or unsubstituted aromatic hydrocarbon group or a substituted or unsubstituted unsaturated heterocyclic group; R⁴³, R⁴⁴ and R⁴⁵ are each independently a hydrogen atom, an alkyl group, an alkoxy group, an aralkoxy group, an amino group, a substituted amino group, a cyano group, a substituted or unsubstituted aryl group, a halogen atom, an aralkyl group, a hydroxyl group, a substituted or unsubstituted alkynyl group, a substituted or unsubstituted heterocyclic group having a nitrogen atom as a hetero atom which is bonded to a pyran ring or a ring of the group represented by the above formula (13), or a condensed heterocyclic group having a hetero base ring condensed with an aromatic hydrocarbon ring or an aromatic heterocyclic ring; o is an integer of 0 to 6;

R⁴¹ and R⁴² are each independently a group represented by the general formula (14): 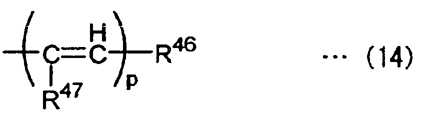 wherein R⁴⁶ is a substituted or unsubstituted aryl group or a substituted or unsubstituted heteroaryl group; R⁴⁷ is a hydrogen atom, an alkyl group or a halogen atom; and p is an integer of 1 to 3, a group represented by the general formula (15): 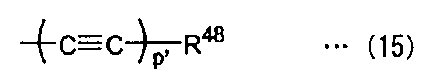 wherein R⁴⁸ is a substituted or unsubstituted aryl group or a substituted or unsubstituted heteroaryl group; and p' is an integer of 1 to 3, a substituted or unsubstituted aryl group, a substituted or unsubstituted heteroaryl group, or an alkyl group, and R⁴¹ and R⁴² may be bonded with each other to form an aliphatic hydrocarbon ring or an aromatic hydrocarbon ring.
Meanwhile, examples of the substituent group in the substituted aryl group and the substituted heteroaryl group as explained in the above general formulae (14) and (15) as well as R⁴¹ and R⁴², are the same groups as described for R⁴³ and R⁴⁴.

Among the chromene compounds represented by the above general formula (12), in view of good photochromic properties such as density of color developed and color fading rate, and good durability, especially preferred are those compounds represented by the following general formulae (16) to (21): 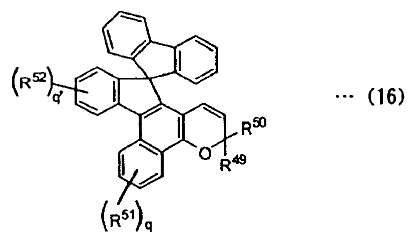 wherein R⁴⁹ and R⁵⁰ are respectively the same as R⁴¹ and R⁴² as described in the general formula (12); R⁵¹ and R⁵² are the same as R⁴⁵ as described in the general formula (12); and q and q' are respectively an integer of 1 or 2,

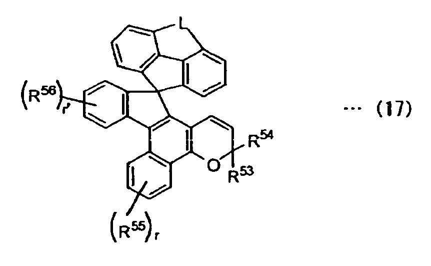

wherein R⁵³ and R⁵⁴ are respectively the same as R⁴¹ and R⁴² as described in the general formula (12); R⁵⁵ and R⁵⁶ are the same as R⁴⁵ as described in the general formula (12); r and r' are each independently 1 or 2; L is a group represented by the following formulae: 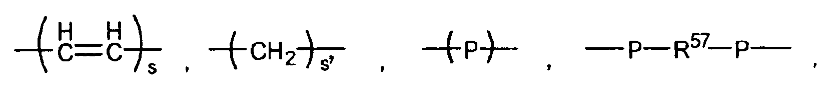 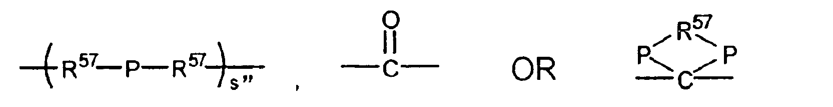 wherein P is an oxygen atom or a sulfur atom; R⁵⁷ is an alkylene group having 1 to 6 carbon atoms; and s, s' and s" are respectively an integer of 1 to 4,

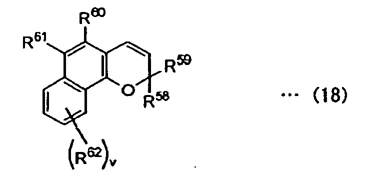

wherein R⁵⁸ and R⁵⁹ are respectively the same as R⁴¹ and R⁴² as described in the general formula (12); R⁶⁰, R⁶¹ and R⁶² are the same as R⁴⁵ as described in the general formula (12); and v is 1 or 2,

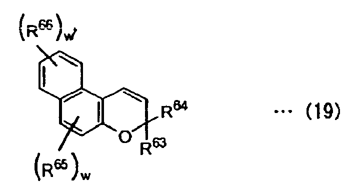

wherein R⁶³ and R⁶⁴ are respectively the same as R⁴¹ and R⁴² as described in the general formula (12); R⁶⁵ and R⁶⁶ are the same as R⁴⁵ as described in the general formula (12); and w and w' are each independently 1 or 2,

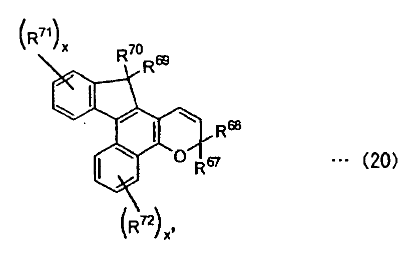

wherein R⁶⁷ and R⁶⁸ are respectively the same as R⁴¹ and R⁴² as described in the general formula (12); R⁶⁹, R⁷⁰, R⁷¹ and R⁷² are the same as R⁴⁵ as described in the general formula (12); and x and x' are each independently 1 or 2, and

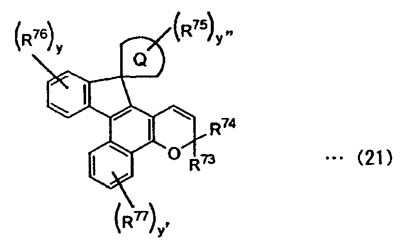

wherein R⁷³ and R⁷⁴ are respectively the same as R⁴¹ and R⁴² as described in the general formula (12); R⁷⁵, R⁷⁶ and R⁷⁷ are the same as R⁴⁵ as described in the general formula (12); the group represented by the formula: 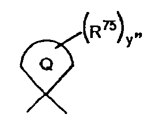 is an aliphatic hydrocarbon ring which may have at least one substituent group;
and y, y' and y" are each independently 1 or 2.

Among the chromene compounds represented by the above general formulae (16) to (21), still more preferred are those chromene compounds represented by the following structural formulae:

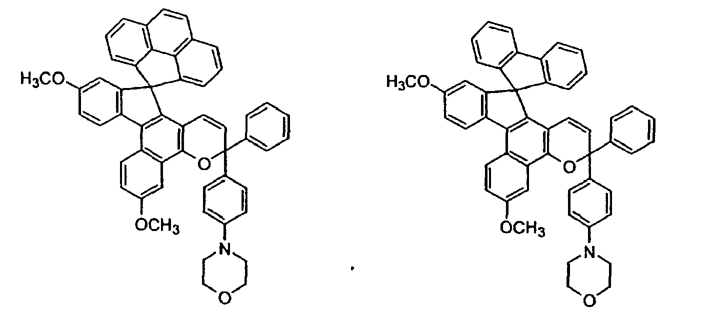

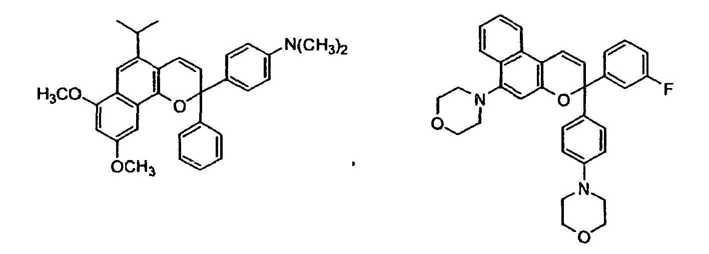

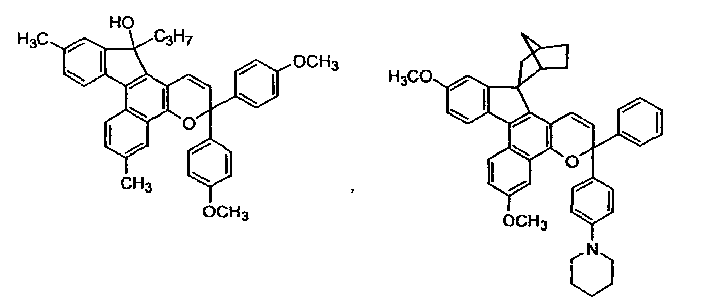

These photochromic compounds may be used in the form of a mixture of any two or more kinds thereof in order to exhibit and develop a suitable color tone. The amount of the photochromic compound as the component (4) blended in the curable composition is usually 0.01 to 20 parts by weight and preferably 0.1 to 10 parts by weight on the basis of 100 parts by weight of the radically polymerizable monomer.

The curable composition of the present invention further contains a photopolymerization initiator as the component (5). The photopolymerization initiator used in the present invention is not particularly limited. Examples of the photopolymerization initiator include benzoin, benzoin methyl ether, benzoin butyl ether, benzophenone, acetophenone, 4,4'-dichlorobenzophenone, diethoxyacetophenone, 2-hydroxy-2-methyl-1-phenylpropan-1-one, benzyl methyl ketal, 1-(4-isopropylphenyl)-2-hydroxy-2-methylpropan-1-one, 1-hydroxycyclohexyl phenyl ketone, 2-isopropyl thioxanthone, bis(2,6-dimethoxybenzoyl-2,4,4-trimethyl-pentyl phosphine oxide, bis(2,4,6-trimethylbenzoyl)-phenyl phosphine oxide, 2,4,6-trimethylbenzoyldiphenyl phosphine oxide and 2-benzyl-2-dimethylamino-1-(4-morpholinophenyl)-butanone-1. Among these photopolymerization initiators, preferred are 1-hydroxycyclohexyl phenyl ketone, 2-isopropyl thioxanthone, bis(2,6-dimethoxybenzoyl-2,4,4-trimethyl-pentyl phosphine oxide, bis(2,4,6-trimethylbenzoyl)-phenyl phosphine oxide and 2,4,6-trimethylbenzoyldipentyl phosphine oxide.
These photopolymerization initiators may be used in the form of a mixture of any two or more kinds thereof. The amount of the photopolymerization initiator as the component (5) blended in the curable composition of the present invention is usually 0.01 to 5 parts by weight and preferably 0.1 to 1 part by weight on the basis of 100 parts by weight of the radically polymerizable monomer.

When the curable composition of the present invention is cured by the method other than photopolymerization, there may be used thermal polymerization initiators. Examples of the thermal polymerization initiators include diacyl peroxides such as benzoyl peroxide, p-chlorobenzoyl peroxide, decanoyl peroxide, lauroyl peroxide and acetyl peroxide; peroxy esters such as t-butyl peroxy-2-ethylhexanoate, t-butyl peroxydicarbonate, cumyl peroxyneodecanoate and t-butyl peroxybenzoate; percarbonates such as diisopropyl peroxydicarbonate, di-2-ethylhexyl peroxydicarbonate and di-sec-butyloxycarbonate; and azo compounds such as 2,2'-azobisisobutyronitrile, 2,2'-azobis(4-dimethylvaleronitrile), 2,2'-azobis(2-methylbutyronitrile) and 1,1'-azobis(cyclohexane-1-carbonitrile).
The amount of the thermal polymerization initiator used may vary depending upon polymerization conditions, kind of initiator used, kinds and composition of polymerizable monomers used, and is usually 0.01 to 10 parts by weight on the basis of 100 parts by weight of whole polymerizable monomers. These thermal polymerization initiators may be used alone or in the form of any two or more kinds thereof.

Further, in order to improve the durability, color development rate, color fading rate and moldability of the photochromic compound, the curable composition of the present invention may further contain various additives such as surfactants, antioxidants, radical scavengers, ultraviolet stabilizers, ultraviolet absorbers, releasing agents, anti-coloring agents, antistatic agents, fluorescent dyes, dyes, pigments, perfumes and plasticizers.
As the above additives, conventionally known compounds may be used without any particular limitations.
The surfactants usable in the present invention may be of either nonionic type, anionic type or cationic type. Among these surfactants, in view of good solubility in the polymerizable monomers, preferred are nonionic surfactants. Specific examples of the suitable nonionic surfactants include sorbitan fatty esters, glycerin fatty esters, decaglycerin fatty esters, propylene glycol/pentaerythritol fatty esters, polyoxyethylene sorbitan fatty esters, polyoxyethylene sorbitol fatty esters, polyoxyethylene glycerin fatty esters, polyethylene glycol fatty esters, polyoxyethylene alkyl ethers, polyoxyethylene phytosterol/phytostanol, polyoxyethylene polyoxypropylene alkyl ethers, polyoxyethylene alkyl phenyl ethers, polyoxyethylene castor oil/hardened castor oil, polyoxyethylene lanolin/lanolin alcohol/beeswax derivatives, polyoxyethylene alkyl amine/fatty amides, polyoxyethylene alkyl phenyl formaldehyde condensates and single chain polyoxyethylene alkyl ethers. These surfactants may be used in the form of a mixture of any two or more thereof. The amount of the surfactant added is preferably in the range of 0.1 to 20 parts by weight on the basis of 100 parts by weight of the polymerizable monomers.

As the antioxidants, radical scavengers, ultraviolet stabilizers and ultraviolet absorbers, there may be suitably used hindered amine-based light stabilizers, hindered phenol-based antioxidants, phenol-based radical scavengers, sulfur-based antioxidants, benzotriazole-based compounds and benzophenone-based compounds. These antioxidants, radical scavengers, ultraviolet stabilizers and ultraviolet absorbers may be respectively used in the form of a mixture of any two or more thereof. Further, these non-polymerizable compounds such as antioxidants, radical scavengers, ultraviolet stabilizers and ultraviolet absorbers may be respectively used in combination with the surfactants. The amount of the antioxidant, radical scavenger, ultraviolet stabilizer or ultraviolet absorber added is 0.001 to 20 parts by weight on the basis of 100 parts by weight of whole polymerizable monomers.
Among the above stabilizers, when the curable composition of the present invention is used for coating, the hindered amine-based light stabilizers can be used as an especially preferred stabilizer from the standpoint of preventing deterioration of the photochromic compound upon curing the curable composition of the present invention or improving a durability of a cured product obtained from the composition. As the hindered amine-based light stabilizers, known hindered amine compounds may be used without any particular limitations as long as these compounds are involved in those hindered amine compounds excluded from the amine compound as the component (3) above. Among these compounds, when the composition is used for coating, the preferred amine compounds having the effect of preventing deterioration of the photochromic compound include bis(1,2,2,6,6-pentamethyl-4-piperidyl)sebacate, as well as commercial products "ADEKASTAB LA-52", ADEKASTAB LA-62", ADEKASTAB LA-77" and "ADEKASTAB LA-82" available from ADEKA CORPORATION, etc. The hindered amine-based light stabilizer may be added to the composition in an amount of 0.001 to 20 parts by weight on the basis of 100 parts by weight of whole polymerizable monomers. When the composition is used for coating, the amount of the hindered amine-based light stabilizer added is preferably 0.1 to 10 parts by weight and more preferably 1 to 10 parts by weight.

In order to obtain a uniform coating layer, the curable composition of the present invention preferably contains a surfactant, a leveling agent, etc., especially a silicone-based or fluorine-based leveling agent exhibiting a good leveling property. The amount of the leveling agent added is not particularly limited, and is usually 0.01 to 1.0% by weight and preferably 0.05 to 0.5% by weight on the basis of the total weight of the curable composition.

The method of preparing the curable composition of the present invention is not particularly limited. The curable composition of the present invention can be prepared by weighing predetermined amounts of the respective components and mixing these components with each other. Meanwhile, the order of addition of the respective components is not particularly limited. All of the respective components may be added at the same time. Alternatively, only the monomer components may be previously mixed with each other, and then the photochromic compound may be added together with other components thereto and mixed with each other immediately before initiating polymerization of the monomers.
The viscosity of the curable composition of the present invention is preferably 20 to 500 cp, more preferably 50 to 300 cp and still more preferably 60 to 200 cp as measured at 25°C.
By adjusting the viscosity of the curable composition to the above-specified range, the thickness of the below-mentioned photochromic coating layer can be readily controlled to a relatively large thickness of 10 to 100 µm, thereby enabling the resultant layer to exhibit sufficient photochromic properties.

Next, the optical member of the present invention is explained.
The optical member of the present invention includes the optical substrate and the photochromic coating layer formed by applying the curable composition onto the substrate and curing the composition.
The optical substrate used in the optical member of the present invention may be a substrate made of a synthetic resin, Examples of the synthetic resin include copolymers of methyl methacrylate and one or more kinds of other monomers, copolymers of diethylene glycol bisallyl carbonate and one or more kinds of other monomers, polycarbonates, polystyrene, polyvinyl chloride, unsaturated polyesters, polyethylene terephthalate, polyurethanes, polythiourethanes, sulfide resins using ene-thiol reaction, and sulfur-containing vinyl polymers, though not particularly limited thereto.
The optical substrate used in the optical member of the present invention is preferably a plastic lens substrate and more preferably a plastic lens substrate for spectacle lenses.

The curable composition of the present invention may be applied onto the optical substrate by an ordinary coating method such as a dip-coating method, a spin-coating method and a spray-coating method. Among these methods, in view of viscosity of the composition and surface profile accuracy of the obtained coating layer, the spin-coating method is preferably used.
Also, before applying the curable composition onto the optical substrate, the optical substrate may be subjected to chemical treatments with acids, alkalis or various organic solvents, physical treatments with plasma, ultraviolet ray or ozone, and washing treatments with various detergents, in order to improve the adhesion between the optical substrate and the photochromic coating layer, etc.

The method of curing the curable composition of the present invention to form the photochromic coating layer is not particularly limited. The curable composition may be cured by known polymerization methods according to kinds of radically polymerizable monomers used. The polymerization reaction may be initiated by heating or irradiation with ultraviolet ray, α-ray, β-ray or γ-ray, or by both thereof. The curable composition is preferably cured first by irradiation with ultraviolet ray and then by heating.
Upon curing by irradiation with ultraviolet ray, known light sources may be used therefor without any particular limitations. Specific examples of the light sources include an ultrahigh pressure mercury lamp, a high pressure mercury lamp, a low pressure mercury lamp, a xenon lamp, carbon arc, a sterilizing lamp and an electrodeless lamp.
Also, the light-irradiating time may be appropriately determined according to kind of UV polymerization initiator, absorption wavelength, sensitivity, thickness of the photochromic coating layer as required, etc.
In the present invention, the thickness of the photochromic coating layer is preferably 10 to 100 µm and more preferably 20 to 50 µm in view of color density upon color development, durability, heat resistance and uniformity of the resultant coating film.

The optical member of the present invention preferably includes a hard coat layer formed on the above photochromic coating layer and more preferably further includes an antireflection film formed on the hard coat layer.
The material of the hard coat layer is not particularly limited, and there may be used known coating composition composed of an organosilicon compound and metal oxide colloid particles.
Examples of the organosilicon compound include organosilicon compounds represented by the general formula (II):

(R⁹¹)_{a'}(R⁹³)_{b'}Si(OR⁹²)_{4-(a'+b')} (II)

wherein R⁹¹ is an organic group containing a glycidoxy group, an epoxy group, a vinyl group, a methacryloxy group, an acryloxy group, a mercapto group, an amino group, a phenyl group, etc.; R⁹² is an alkyl group having 1 to 4 carbon atoms, an acyl group having 1 to 4 carbon atoms or an aryl group having 6 to 10 carbon atoms; R⁹³ is an alkyl group having 1 to 6 carbon atoms or an aryl group having 6 to 10 carbon atoms; a' and b' are respectively an integer of 0 or 1, and hydrolyzed products thereof.

Examples of the alkyl group having 1 to 4 carbon atoms as R⁹² include methyl, ethyl, propyl and butyl. These alkyl groups may be either linear or branched.
Examples of the acyl group having 1 to 4 carbon atoms as R⁹² include acetyl, propionyl, oleyl and benzoyl.
Examples of the aryl group having 6 to 10 carbon atoms as R⁹² include phenyl, xylyl and tolyl.
Examples of the alkyl group having 1 to 6 carbon atoms as R⁹³ include methyl, ethyl, propyl, butyl, pentyl and hexyl. These alkyl groups may be either linear or branched.
Examples of the aryl group having 6 to 10 carbon atoms as R⁹³ include phenyl, xylyl and tolyl.

Specific examples of the compounds represented by the above general formula (II) include methyl silicate, ethyl silicate, n-propyl silicate, i-propyl silicate, n-butyl silicate, sec-butyl silicate, t-butyl silicate, tetraacetoxysilane, methyl trimethoxysilane, methyl triethoxysilane, methyl tripropoxysilane, methyl triacetoxysilane, methyl tributoxysilane, methyl triamyloxysilane, methyl triphenoxysilane, methyl tribenzyloxysilane, methyl triphenethyloxysilane, glycidoxymethyl trimethoxysilane, glycidoxymethyl triethoxysilane, α-glycidoxyethyl triethoxysilane, β-glycidoxyethyl trimethoxysilane, β-glycidoxyethyl triethoxysilane, α-glycidoxypropyl trimethoxysilane, α-glycidoxypropyl triethoxysilane, β-glycidoxypropyl trimethoxysilane, β-glycidoxypropyl triethoxysilane, γ-glycidoxypropyl trimethoxysilane, γ-glycidoxypropyl triethoxysilane, γ-glycidoxypropyl tripropoxysilane, γ-glycidoxypropyl tributoxysilane, γ-glycidoxypropyl triphenoxysilane, α-glycidoxybutyl trimethoxysilane, α-glycidoxybutyl triethoxysilane, β-glycidoxybutyl trimethoxysilane, β-glycidoxybutyl triethoxysilane, γ-glycidoxybutyl trimethoxysilane, γ-glycidoxybutyl triethoxysilane, δ-glycidoxybutyl trimethoxysilane, δ-glycidoxybutyl triethoxysilane, (3,4-epoxycyclohexyl)methyl trimethoxysilane, (3,4-epoxycyclohexyl)methyl triethoxysilane, β-(3,4-epoxycyclohexyl)ethyl trimethoxysilane, β-(3,4-epoxycyclohexyl)ethyl triethoxysilane, β-(3,4-epoxycyclohexyl)ethyl tripropoxysilane, β-(3,4-epoxycyclohexyl)ethyl tributoxysilane, β-(3,4-epoxycyclohexyl)ethyl triphenoxysilane, γ-(3,4-epoxycyclohexyl)propyl trimethoxysilane, γ-(3,4-epoxycyclohexyl)propyl triethoxysilane, δ-(3,4-epoxycyclohexyl)butyl trimethoxysilane, δ-(3,4-epoxycyclohexyl)butyl triethoxysilane, glycidoxymethylmethyl dimethoxysilane, glycidoxymethylmethyl diethoxysilane, α-glycidoxyethylmethyl dimethoxysilane, α-glycidoxyethylmethyl diethoxysilane, β-glycidoxyethylmethyl dimethoxysilane, β-glycidoxyethylmethyl diethoxysilane, α-glycidoxypropylmethyl dimethoxysilane, α-glycidoxypropylmethyl diethoxysilane, β-glycidoxypropylmethyl dimethoxysilane, β-glycidoxypropylmethyl diethoxysilane, γ-glycidoxypropylmethyl dimethoxysilane, γ-glycidoxypropylmethyl diethoxysilane, γ-glycidoxypropylmethyl dipropoxysilane, γ-glycidoxypropylmethyl dibutoxysilane, γ-glycidoxypropylmethyl diphenoxysilane, γ-glycidoxypropylethyl dimethoxysilane, γ-glycidoxypropylethyl diethoxysilane, γ-glycidoxypropylvinyl dimethoxysilane, γ-glycidoxypropylvinyl diethoxysilane, γ-glycidoxypropylphenyl dimethoxysilane, γ-glycidoxypropylphenyl diethoxysilane, ethyl trimethoxysilane, ethyl triethoxysilane, vinyl trimethoxysilane, vinyl triacetoxysilane, vinyl trimethoxyethoxysilane, phenyl trimethoxysilane, phenyl triethoxysilane, phenyl triacetoxysilane, γ-chloropropyl trimethoxysilane, γ-chloropropyl triethoxysilane, γ-chloropropyl triacetoxysilane, 3,3,3-trifluoropropyl trimethoxysilane, γ-methacryloxypropyl trimethoxysilane, γ-mercaptopropyl trimethoxysilane, γ-mercaptopropyl triethoxysilane, β-cyanoethyl triethoxysilane, chloromethyl trimethoxysilane, chloromethyl triethoxysilane, N-(β-aminoethyl) γ-aminopropyl trimethoxysilane, N-(β-aminoethyl) γ-aminopropylmethyl dimethoxysilane, γ-aminopropylmethyl dimethoxysilane, N-(β-aminoethyl) γ-aminopropyl triethoxysilane, N-(β-aminoethyl) γ-aminopropylmethyl diethoxysilane, dimethyl dimethoxysilane, phenylmethyl dimethoxysilane, dimethyl diethoxysilane, phenylmethyl diethoxysilane, γ-chloropropylmethyl dimethoxysilane, γ-chloropropylmethyl diethoxysilane, dimethyl diacetoxysilane, γ-methacryloxypropylmethyl dimethoxysilane, γ-methacryloxypropylmethyl diethoxysilane, γ-mercaptopropylmethyl dimethoxysilane, γ-mercaptopropylmethyl diethoxysilane, methylvinyl dimethoxysilane and methylvinyl diethoxysilane.
Examples of the material of the metal oxide colloid particles include tungsten oxide (WO₃), zinc oxide (ZnO), silicon oxide (SiO₂), aluminum oxide (Al₂O₃), titanium oxide (TiO₂), zirconium oxide (ZrO₂), tin oxide (SnO₂), beryllium oxide (BeO) and antimony oxide (Sb₂O₅). These metal oxides may be used alone or in combination of any two or more thereof.
The material of the antireflection film as well as the method of forming the film are not particularly limited, and there may be used conventionally known single-layer or multi-layer films made of inorganic oxides.
Examples of the inorganic oxides include silicon dioxide (SiO₂), zirconium oxide (ZrO₂), aluminum oxide (Al₂O₃), niobium oxide (Nb₂O₅) and yttrium oxide (Y₂O₃).

### EXAMPLES

The present invention is described in more detail by referring to the following examples. However, it should be noted that these examples are only illustrative and not intended to limit the invention thereto. Various properties were measured by the following methods.
Meanwhile, in the following examples and comparative examples, the optical members obtained therein were subjected to the following tests to measure properties thereof.
(1) Scratch resistance Test
   The surface of the plastic lens was rubbed with a steel wool (standard: #0000; available from Nippon Steel Wool Co., Ltd.) under a load of 1 kgf/cm², and observed by naked eyes to evaluate scratches thereon. The scratch resistance of the plastic lens was evaluated according to the following criteria.
   A: Substantially no scratches even when strongly rubbed;
   B: Some scratches when strongly rubbed;
   C: Considerable scratches to the same extent as those of a plastic substrate.
(2) Adhesion Test
   The surface of a cured film was cross-cut at intervals of 1 mm to form 100 square grids. An adhesive tape (tradename: "CELLOTAPE" available from Nichiban Co., Ltd.) was strongly attached onto the cross-cut surface, and rapidly peeled off therefrom to examine whether or not any portion of the cured film was peeled off. The evaluation result was expressed by such a rating in which 100/100 was allotted when no peel occurred, and 0/100 was allotted when a whole portion of the cured film was peeled off.
(3) Appearance
   The appearance of the optical member was observed under a fluorescent lamp in a dark room. The optical member having no cloudiness was evaluated to be "good".

### EXAMPLE 1

### (i) Preparation of Photochromic Coating Solution

A plastic container was charged with 100 parts by weight of radically polymerizable monomers composed of 20 parts by weight of trimethylolpropane trimethacrylate, 35 parts by weight of a BPE oligomer (2,2-bis(4-methacryloyloxypolyethoxyphenyl)propane), 10 parts by weight of EB6A (polyester oligomer hexaacrylate), 10 parts by weight of polyethylene glycol diacrylate having an average molecular weight of 532 and 10 parts by weight of glycidyl methacrylate, and further 3 parts by weight of Chromene 1 having the below-mentioned formula as a photochromic pigment, 5 parts by weight of an antioxidant "LS765" (bis(1,2,2,6,6-pentamethyl-4-piperidyl) sebacate, methyl (1,2,2,6,6-pentamethyl-4-piperidyl)sebacate), and 0.4 part by weight of CGI-184 (1-hydro0xycyclohexyl phenyl ketone) and 0.1 part by weight of CGI-403 (bis(2,6-dimethoxybenzoyl-2,4,4-trimethylpentyl phosphine oxide) as a UV polymerization initiator were added thereto. The contents of the plastic container were fully mixed with each other under stirring to obtain a composition. Then, 6.4 parts by weight of γ-glycidoxypropyl trimethoxysilane as an epoxy-containing organosilicon compound ("KBM403" available from Shin-Etsu Chemical Co., Ltd.) was dropped into the composition under stirring. After fully stirring the obtained reaction solution, 1.4 parts by weight of N-methyl diethanolamine was weighed and dropped thereinto, and the resultant reaction mixture was further fully stirred. Thereafter, the reaction mixture was mixed with 0.1 part by weight of a silicone-based leveling agent "Y-7006" (polyoxyalkylene/dimethylpolysiloxane copolymer; available from Nippon Unicar Co., Ltd.), and then defoamed for 2 min using a rotating/rolling type stirring defoaming apparatus "AR-250" available from Thinky corporation, thereby obtaining a photochromic curable composition.

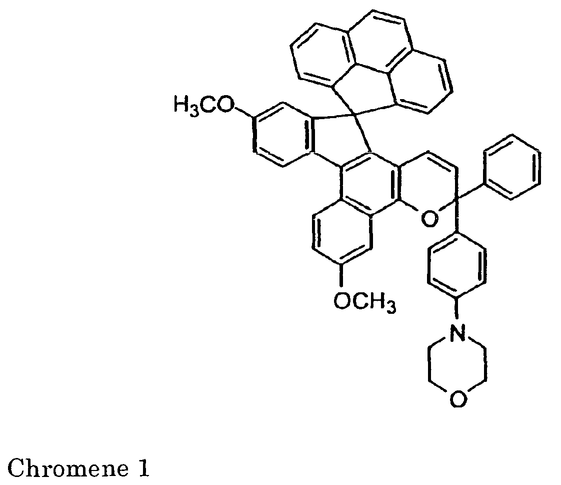

(ii) Formation of Photochromic Coating Layer
   A plastic lens substrate made of polythiourethane (tradename "EYAS" available from HOYA Corp.; thickness at center: 2.0 mm) was immersed in a 10 wt% sodium hydroxide aqueous solution at 60°C for 5 min, fully washed with pure water and then dried. A convex surface of the thus-treated plastic lens substrate was coated with the curable composition prepared in the above step (i) by a spin-coating method. The thus coated plastic lens substrate was placed in a nitrogen atmosphere (oxygen concentration: 500 ppm or less), and irradiated with an ultraviolet ray having a wavelength of 405 nm at a cumulative light quantity of 1800 mJ/cm² (100 mW/cm² for 3 min) using a UV lamp (D bulb) available from Fusion Co., Ltd., and further cured at 110°C for 60 min, thereby obtaining a plastic lens having a photochromic coating layer.
(iii) Preparation of Hard Coating Solution
   A glass container equipped with a magnetic stirrer was charged with 141 parts by weight of water-dispersed colloidal silica (solid content: 40% by weight; average particle size: 15 mµ), and while stirring, 30 parts by weight of acetic acid was added thereto, followed by fully mixing the contents of the glass container under stirring. Thereafter, 74 parts by weight of γ-glycidoxypropyl trimethoxysilane (available from Shin-Etsu Chemical Co., Ltd.) was dropped into the glass container, and the contents of the glass container were stirred at 5°C for 24 h. Next, 100 parts by weight of propylene glycol monomethyl ether, 150 parts by weight of isopropyl alcohol, 0.2 part by weight of a silicone-based surfactant and 7.5 parts by weight of aluminum acetyl acetonate as a curing agent were added to the container, and the contents of the container were fully stirred and then subjected to filtration, thereby preparing a hard coating solution.
(iv) Formation of Hard Coat Layer
   The plastic lens having the photochromic coating layer obtained in the above step (ii) was immersed in a 10 wt% sodium hydroxide aqueous solution at 60°C for 5 min, fully washed with pure water and then dried. The thus-treated plastic lens was coated with the hard coating composition prepared in the above step (iii) by a dipping method (lifting velocity: 20 cm/min). The thus applied hard coating composition was heated and cured at 110°C for 60 min, thereby forming a hard coat layer on the photochromic coating layer of the plastic lens. The plastic lens provided with the thus obtained hard coat layer was subjected to the above evaluation procedures (1) to (3). The results are shown in Table 1.
(v) Formation of Antireflection Film
   The plastic lens provided thereon with the hard coat layer obtained in the above step (iv) was subjected to formation of the following antireflection film. The plastic lens having the hard coat layer was placed within a vapor-deposition apparatus, and heated to 85°C while evacuating. After evacuating until reaching a pressure of 2.67 x 10⁻³ Pa, raw materials were deposited on the plastic lens by an electron beam heating method to form an antireflection film having a laminated structure composed of SiO₂ and ZrO₂ (λ/4 - λ/2 - λ/4; λ: wavelength). The thus obtained plastic lens formed thereon with the hard coat layer and the antireflection film was subjected to the above evaluation procedures (1) and (2). The results are shown in Table 1.

### EXAMPLE 2

The same procedure as in Example 1 was repeated except that γ-glycidoxypropyl trimethoxysilane used as the organosilicon compound in the step (i) of preparing the photochromic coating solution in Example 1 was replaced with γ-glycidoxypropyl triethoxysilane, thereby producing a plastic lens having a hard coat layer which was subjected to the above evaluation procedures (1) to (3), and further producing a plastic lens having a hard coat layer and an antireflection film which was subjected to the above evaluation procedures (1) and (2). The results are shown in Table 1.

### EXAMPLE 3

The same procedure as in Example 1 was repeated except that γ-glycidoxypropyl trimethoxysilane used as the organosilicon compound in the step (i) of preparing the photochromic coating solution in Example 1 was replaced with γ-glycidoxypropylmethyl diethoxysilane, thereby producing a plastic lens having a hard coat layer which was subjected to the above evaluation procedures (1) to (3), and further producing a plastic lens having a hard coat layer and an antireflection film which was subjected to the above evaluation procedures (1) and (2). The results are shown in Table 1.

### EXAMPLE 4

The same procedure as in Example 1 was repeated except that polythiourethane used as the material of the plastic lens substrate in the step (ii) of forming the photochromic coating layer in Example 1 was replaced with diethylene glycol bisallyl carbonate (tradename "HL" available from HOYA Corp.; thickness at center: 2.0 mm), thereby producing a plastic lens having a hard coat layer which was subjected to the above evaluation procedures (1) to (3), and further producing a plastic lens having a hard coat layer and an antireflection film which was subjected to the above evaluation procedures (1) and (2). The results are shown in Table 1.

### COMPARATIVE EXAMPLE 1

The same procedure as in Example 1 was repeated except that γ-glycidoxypropyl trimethoxysilane used as the organosilicon compound in the step (i) of preparing the photochromic coating solution in Example 1 was replaced with γ-methacryloyloxypropyl trimethoxysilane, thereby producing a plastic lens having a hard coat layer which was subjected to the above evaluation procedures (1) to (3), and further producing a plastic lens having a hard coat layer and an antireflection film which was subjected to the above evaluation procedures (1) and (2). The results are shown in Table 1.

### COMPARATIVE EXAMPLE 2

The same procedure as in Example 1 was repeated except that γ-glycidoxypropyl trimethoxysilane used as the organosilicon compound in the step (i) of preparing the photochromic coating solution in Example 1 was replaced with γ-methacryloyloxypropyl trimethoxysilane, and polythiourethane used as the material of the plastic lens substrate in the step (ii) of forming the photochromic coating layer in Example 1 was replaced with diethylene glycol bisallyl carbonate (tradename "HL" available from HOYA Corp.; thickness at center: 2.0 mm), thereby producing a plastic lens having a hard coat layer which was subjected to the above evaluation procedures (1) to (3), and further producing a plastic lens having a hard coat layer and an antireflection film which was subjected to the above evaluation procedures (1) and (2). The results are shown in Table 1.

### COMPARATIVE EXAMPLE 3

The same procedure as in Example 1 was repeated except that no γ-glycidoxypropyl trimethoxysilane as the organosilicon compound was used in the step (i) of preparing the photochromic coating solution in Example 1, thereby producing a plastic lens having a hard coat layer which was subjected to the above evaluation procedures (1) to (3), and further producing a plastic lens having a hard coat layer and an antireflection film which was subjected to the above evaluation procedures (1) and (2). The results are shown in Table 1.

**TABLE 1-1**

| | Plastic lens substrate | Organosilicon compound |
|---|---|---|
| Example 1 | EYAS | γ-glycidoxypropyl trimethoxysilane |
| Example 2 | EYAS | γ-glycidoxypropyl triethoxysilane |
| Example 3 | EYAS | γ-glycidoxypropylmethyl diethoxysilane |
| Example 4 | HL | γ-glycidoxypropyl trimethoxysilane |
| Comparative Example 1 | EYAS | γ-methacryloyloxypropyl trimethoxysilane |
| Comparative Example 2 | HL | γ-methacryloyloxypropyl trimethoxysilane |
| Comparative Example 3 | EYAS | - |

**TABLE 1-2**

| | Lens with hard coat layer | | | Lens with hard coat layer and antireflection film | |
|---|---|---|---|---|---|
| | Scratch resistance | Adhesion | Appearance | Scratch resistance | Adhesion |
| Example 1 | A | 100/100 | Good | A | 100/100 |
| Example 2 | A | 100/100 | Good | A | 100/100 |
| Example 3 | A | 100/100 | Good | A | 100/100 |
| Example 4 | A | 100/100 | Good | A | 100/100 |
| Comparative Example 1 | A | 50/100 | Good | A | 50/100 |
| Comparative Example 2 | A | 0/100 | Good | A | 0/100 |
| Comparative Example 3 | A | 0/100 | Good | A | 0/100 |

As shown in Table 1, the photochromic coating layers of the plastic lenses obtained in Examples 1 to 4 which all contained the components (1) to (5) were excellent in adhesion to the plastic lens substrate, whereas the plastic lenses obtained in Comparative Examples 1 to 3 using the organosilicon compounds containing no epoxy group were deteriorated in adhesion to the plastic lens substrate.

### INDUSTRIAL APPLICABILITY

The optical member of the present invention includes a photochromic coating layer which is excellent in adhesion to an optical substrate. In addition, the curable composition of the present invention is suitably used as a raw material of the photochromic coating layer capable of exhibiting an excellent adhesion to various optical substrates.

## Claims

1. A curable composition comprising:
(1) a radically polymerizable monomer;
(2) an organosilicon compound containing an epoxy group bonded to one terminal end thereof;
(3) an amine compound;
(4) a photochromic compound; and
(5) a photopolymerization initiator,
said organosilicon compound (2) containing an epoxy group bonded to one terminal end thereof being a compound containing a silanol group or a compound containing a group capable of forming a silanol group by hydrolysis thereof.

2. The curable composition according to claim 1, wherein said composition comprises (1) 100 parts by weight of the radically polymerizable monomer, (2) 1.0 to 15 parts by weight of the organosilicon compound containing an epoxy group bonded to one terminal end thereof, (3) 0.01 to 20 parts by weight of the amine compound, (4) 0.01 to 20 parts by weight of the photochromic compound, and (5) 0.01 to 5 parts by weight of the photopolymerization initiator.

3. The curable composition according to claim 1 or 2, wherein the radically polymerizable monomer (1) contains at least one radically polymerizable group selected from the group consisting of an acryloyl group, a methacryloyl group, an acryloyloxy group, a methacryloyloxy group, a vinyl group, an allyl group and a styryl group.

4. The curable composition according to claim 1 or 2, wherein the radically polymerizable monomer (1) contains at least one radically polymerizable group selected from the group consisting of an acryloyl group, a methacryloyl group, an acryloyloxy group and a methacryloyloxy group.

5. The curable composition according to claim 1 or 2, wherein said organosilicon compound (2) is an organosilicon compound represented by the general formula (I):
(R⁸¹)ₐ(R⁸³)_{b}Si(OR⁸²)_{4-(a+b)} (I)
wherein R⁸¹ is an organic group containing an epoxy group; R⁸² is an alkyl group having 1 to 4 carbon atoms, an acyl group having 1 to 4 carbon atoms or an aryl group having 6 to 10 carbon atoms; R⁸³ is an alkyl group having 1 to 6 carbon atoms or an aryl group having 6 to 10 carbon atoms; a is an integer of 1; and b is an integer of 0 or 1, or a hydrolyzed product thereof.

6. The curable composition according to claim 5, wherein said organic group containing an epoxy group as R⁸¹ is an epoxy group, a glycidoxy group or a 3,4-epoxycyclohexyl group.

7. The curable composition according to claim 1 or 2, wherein said amine compound (3) is at least one amine compound selected from the group consisting of non-polymerizable low-molecular amine compounds including triethanolamine, N-methyldiethanolamine, triisopropanolamine, 4,4-dimethylaminobenzophenone and diazabicyclooctane; polymerizable group-containing amine compounds including N,N-dimethylaminoethyl methacrylate and N,N-diethylaminoethyl methacrylate; and silyl group-containing amine compounds including n-(hydroxyethyl)-N-methylaminopropyl trimethoxysilane, dimethoxyphenyl-2-piperidinoethoxysilane, N,N-diethylaminomethyl trimethylsilane and (N,N-diethyl-3-aminopropyl)trimethoxysilane.

8. An optical member comprising an optical substrate and a photochromic coating layer formed by applying the curable composition as defined in claim 1 or 2 onto the optical substrate and curing the composition.

9. The optical member according to claim 8, further comprising a hard coat layer formed on the photochromic coating layer.

10. The optical member according to claim 9, further comprising an antireflection film formed on the hard coat layer.

11. The optical member according to claim 8, wherein the optical substrate is a plastic lens substrate.
